# EUROPÄISCHE PATENTSCHRIFT

(11) **EP 0 744 311 B1**
(45) Veröffentlichungstag und Bekanntmachung des Hinweises auf die Patenterteilung: **01.09.1999**
(21) Anmeldenummer: 95120126.8
(22) Anmeldetag: 20.12.1995
(51) Int. Cl.: B60J 7/22

(54) **Fahrzeug mit einem Windabweiser**
Vehicle with wind deflector
Véhicule avec déflecteur de vent

(30) Priorität: 22.05.1995 DE 19518696
(43) Veröffentlichungstag der Anmeldung: 27.11.1996
(73) Patentinhaber: Bayerische Motoren Werke Aktiengesellschaft, 80788 München (DE)
(72) Erfinder: Minatti, Hans, D-80935 München (DE); Moll, Patrick, D-81375 München (DE)

(56) Entgegenhaltungen:
- EP-A- 0 490 213
- US-A- 1 487 151

## Beschreibung

Die Erfindung bezieht sich auf ein Fahrzeug mit einem Windabweiser nach den Merkmalen des Oberbegriffes von Patentanspruch 1.

Ein bekanntes derartiges Fahrzeug (DE-C-40 39 485) offenbart in einer ganzen Reihe von Varianten einen Windabweiser für den Rand einer Schiebedachöffnung, der in Teilbereichen seiner Fläche mit einem Netz versehen ist. Die Netz-Flächenbereiche sind dabei jedoch durchwegs in einer Höhe des aufgerichteten Windabweisers vorgesehen, die erheblich oberhalb der Dachkontur liegt. Zwar läßt sich mit den vorbekannten Windabweisern das störende Schiebedach-Wummern ohne Inkaufnahme eines erhöhten Geräusch-Rauschanteils deutlich vermindern, doch unterliegen diese Netz-Windabweiser noch einer starken Verschmutzung, insbesondere durch Insekten. Dies bedingt nicht nur eine Beeinträchtigung der Wirksamkeit des Windabweisers. Der im Netzbereich schlecht zu reinigende Windabweiser stört im verschmutzten Zustand darüber hinaus auch ästhetisch.

Der Erfindung liegt die Aufgabe zugrunde, ein Fahrzeug mit einem Netz-Windabweiser zu schaffen, der ohne Einbußen bei den Vorteilen eines Netz-Windabweisers der erwähnten Verschmutzungsgefahr nicht mehr ausgesetzt ist.

Diese Aufgabe wird erfindungsgemäß durch die Merkmale des Patentanspruches 1 gelöst.

Wenn der Windabweiser nur in seinem unteren Querschnittsbereich mit dem luftdurchlässigen Netz versehen ist, ist es möglich, den Windabweiser nur in seinem oberen, vollflächigen Querschnittsbereich einer erhöhten Verschmutzung, insbesondere durch Insekten, auszusetzen. Trotzdem strömt durch den unteren, mit dem Netz versehenen Querschnittsbereich noch so viel Luft, daß die sich in der DE-A-40 39 485 näher beschriebene, sehr feinturbulente Schicht hinter dem Netz und zwischen der weitgehend ruhenden Luft des Innenraums und der mit hoher Geschwindigkeit strömenden Luft oberhalb des Dachs ausbildet. Diese zusätzlich geschaffene Grenzschicht bzw. Scherschicht wirkt als 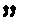 Polster" und federt die niederfrequenten Pulsationsschwingungen ab, die als Schiebedach-Wummern bekannt sind. Wegen ihrer Massenträgheit können größere Schmutzteilchen und Insekten der nach unten zu dem Netzbereich abgelenkten Teil-Luftströmung nicht folgen. Sie prallen auf den vollflächigen oberen Abschnitt des Windabweisers auf. Von dort sind sie, im Gegensatz zu den Netzbereichen, wesentlich einfacher wieder zu entfernen.

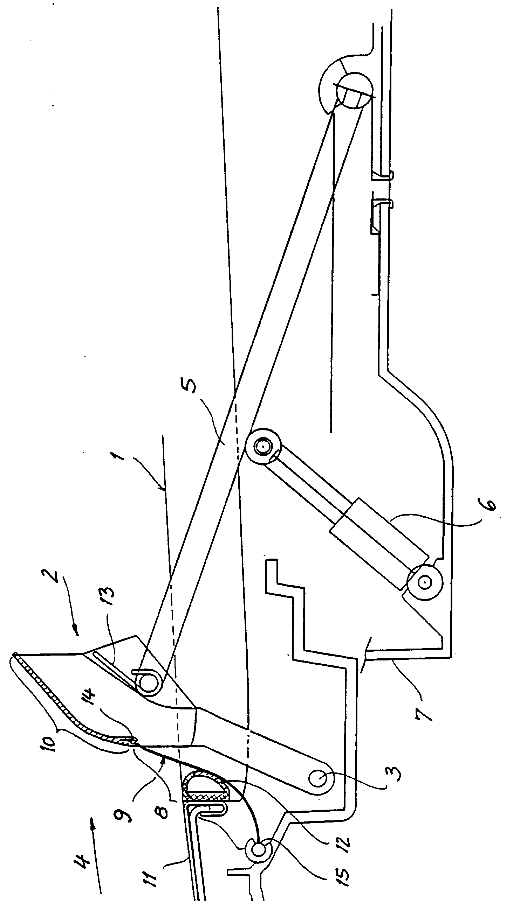

Die Erfindung ist im folgenden anhand eines in der Zeichnung dargestellten Ausführungsbeispiels näher erläutert. Die einzige Figur zeigt einen vertikalen Schnitt in Fahrzeuglängsrichtung etwa durch den mittleren Bereich des Windabweisers mit dem angrenzenden Bereich der Schiebedach-Öffnung.

In der Zeichnung ist mit 1 die Dachkontur im vorderen Bereich einer Schiebedach-Öffnung eines Fahrzeugs angedeutet. Der Windabweiser 2 ist in seiner um eine Querachse 3 nach oben geschwenkten Wirkstellung dargestellt, in der er bei fahrendem Fahrzeug quer, wie durch die Luftströmung 4 angedeutet, angeströmt wird. Das Hochstellen des Windabweisers 2 erfolgt über Ausstellhebel 5, die sich über Druckfedern 6 gegen die Schiebedachkassette 7 abstützen. Beim Schließen des (nicht dargestellten) Schiebedach-Deckels drückt dieser Deckel die Ausstellhebel 5 nach unten, die den Windabweiser 2 dann unterhalb die Dachkontur 1 so weit verlagern, daß er noch unterhalb des Deckels liegt.

Der Windabweiser 2 ist in seinem unteren Querschnittsbereich 8 mit einem luftdurchlässigen Netz 9 versehen. Der obere Querschnittsbereich 10 ist dagegen vollflächig und geschlossen ausgebildet und kann aus einem entsprechend geformten Blech bestehen.

Bei dem dargestellten Ausführungsbeispiel sind bei hochgeschwenktem Windabweiser 2 etwa zwei Drittel des über die Dachkontur 1 ragenden Querschnittsbereichs des Windabweisers eine geschlossene Fläche, während etwa das untere Drittel des über die Dachkontur ragenden Querschnittsbereiches mit dem luftdurchlässigen Netz 9 versehen ist. Bei einem so gelegten Höhenbereich des Übergangs des geschlossenen Flächenbereichs zum netzförmigen Flächenbereich des Windabweisers treffen Insekten und größere andere Schmutzpartikel nicht mehr auf das Netz 9, das von einer weitgehend schmutzfreien Luft durchströmt wird. Die sich nach dem Netz 9 ausbildende feinturbulente Strömung vermindert in der schon angedeuteten Weise das Schiebedach-Wummern, ohne daß ein größeres Strömungsrauschen hinzunehmen ist.

Wie man in der Zeichnung erkennt, kann der hochgeschwenkte Windabweiser 2 mit seinem unteren Querschnittsbereich 8 an der Dachaußenhaut 11 anlegen. Zweckmäßig erfolgt dies in der Weise, daß der Windabweiser 2 an der Dichtung 12 für den Schiebedach-Deckel anliegt, die hier an der Dachaußenhaut 11 am Öffnungsrand angebracht ist. Der hochgeschwenkte Windabweiser 2 kann bis zu 35 mm über die Dachkontur 1 nach oben ragen.

Der Windabweiser 2 ist, wie in der Zeichnung ersichtlich, im Querschnitt leicht S-förmig gestaltet und mit dem oberen Rand 12 nach hinten gerichtet. Das Netz 9 beginnt dabei unterhalb des Umkehrpunktes der S-Form.

Bei dem dargestellten Ausführungsbeispiel ist am unteren Rand 14 des oberen vollflächig geschlossenen Querschnittsbereichs (10) des Windabweisers 2 ein flexibles Netz 9 angebracht. An seinem anderen, gegenüberliegenden Rand (15) ist dieses biegsame Netz 9 an der Schiebedachkassette 7 festgelegt.

Weiterhin kann der Windabweiser 2 gegen die Wirkung einer Schenkelfeder 13 ab einer Fahrgeschwindigkeit von etwa 100 km/h durch die Windkräfte nach unten verlagerbar sein. Ab dieser Geschwindigkeit und darüber tritt das störende Schiebedach-Wummern kaum mehr auf.

## Patentansprüche

1. Fahrzeug mit einem Windabweiser, der an einer tangential überströmten Öffnung, insbesondere der Schiebedach-Öffnung, des Fahrzeugs angeordnet und in seiner nach oben geschwenkten Wirkstellung quer angeströmt ist sowie in Teilbereichen seiner Fläche mit einem luftdurchlässigen Netz versehen ist,
dadurch gekennzeichnet, daß der Windabweiser (2) nur in seinem unteren Querschnittsbereich (8) mit dem luftdurchlässigen Netz (9) versehen ist, wobei der hochgeschwenkte Windabweiser (2) in seinem oberen, über die Dachkontur (1) ragenden Querschnittsbereich zu etwa zwei Drittel eine geschlossene Fläche aufweist und in etwa dem unteren Drittel dieses Querschnittsbereiches mit dem luftdurchlässigen Netz (9) versehen ist.

2. Fahrzeug nach Anspruch 1,
dadurch gekennzeichnet, daß der hochgeschwenkte Windabweiser (2) mit seinem unteren Bereich (8) an der Dachaußenhaut (11) bzw. einer Schiebedachkassette anliegt.

3. Fahrzeug nach Anspruch 2,
dadurch gekennzeichnet, daß der hochgeschwenkte Windabweiser (2) an der Dichtung (12) für den Schiebedach-Deckel anliegt.

4. Fahrzeug nach Anspruch 1,
dadurch gekennzeichnet, daß der hochgeschwenkte Windabweiser (2) bis zu 35 mm über die Dachkontur (1) ragt.

5. Fahrzeug nach Anspruch 1,
dadurch gekennzeichnet, daß der Windabweiser (2) im Querschnitt leicht S-förmig und mit dem oberen Rand (12) nach hinten gerichtet ist.

6. Fahrzeug nach Anspruch 5,
dadurch gekennzeichnet, daß das Netz (9) unterhalb des Umkehrpunktes der S-Form beginnt.

7. Fahrzeug nach Anspruch 1,
dadurch gekennzeichnet, daß am unteren Rand (14) des vollflächigen Querschnittsbereichs (10) ein flexibles Netz (9) angebracht ist, das an seinem gegenüberliegenden Rand (15) an der Schiebedachkassette (7) bzw. am Dach festgelegt ist.

8. Fahrzeug nach Anspruch 1,
dadurch gekennzeichnet, daß der Windabweiser (2) gegen Federkraft (13) ab einer Fahrgeschwindigkeit von etwa 100 km/h durch die Windkräfte nach unten verlagerbar ist.

## Claims

1. A vehicle comprising a wind deflector which is disposed on an opening of the vehicle, especially the sliding-roof opening, over which a tangential flow occurs and, when swung up into its operative position, is exposed to a transverse flow, parts of the surface of the wind deflector being covered by an air-permeable net,
characterised in that only the bottom cross-sectional region (8) of the wind deflector (2) is covered by the air-permeable net (9), whereas when the wind defector (2) is swung upwards, about two-thirds of its upper cross-sectional area projecting above the roof contour (1) is continuous whereas approximately the lower third of the cross-sectional area is covered by the air-permeable net (9).

2. A vehicle according to claim 1,
characterised in that when the wind defector (2) is swung upwards, its lower region (8) adjoins the roof shell (11) or a sliding-roof module.

3. A vehicle according to claim 2,
characterised in that when the wind defector (2) is swung up, it adjoins the seal (12) for the sliding-roof cover.

4. A vehicle according to claim 1,
characterised in that when the defector (2) is swung up, it projects up to 35 mm above the roof contour (1).

5. A vehicle according to claim 1,
characterised in that the wind deflector (2) is slightly S-shaped in cross-section and its upper edge (12) extends backwards.

6. A vehicle according to claim 5,
characterised in that the net (9) begins below the turning-point of the S shape.

7. A vehicle according to claim 1,
characterised in that a flexible net (9) is attached to the lower edge (14) of the smooth cross-sectional area (10) whereas at the opposite edge (15) the net is fastened to the sliding-roof module (7) or to the roof.

8. A vehicle according to claim 1,
characterised in that the wind defector (2) is movable downwards by the wind against the force of a spring (13) when the vehicle is traveling at about 100 km/h or more.

## Revendications

1. Véhicule avec un déflecteur de vent, disposé sur une ouverture sur laquelle passe un écoulement tangentiel, en particulier l'ouverture de toit ouvrant du véhicule, et sur laquelle un écoulement arrive transversalement lorsqu'il est calé dans une position active pivotée vers le haut, ainsi que pourvu, dans des zones partielles de sa surface, d'un filet perméable à l'air,
caractérisé en ce que
le déflecteur de vent (2) n'est doté du filet (9) perméable à l'air que dans sa zone de section transversale inférieure (8), le déflecteur de vent (2) ayant été relevé par pivotement présentant, dans sa zone de section transversale supérieure, ressortant du contour de toit (1), jusqu'à peu près aux deux tiers, une surface fermée et étant pourvue, à peu près dans le tiers inférieur de cette zone de section transversale, du filet (9) perméable à l'air.

2. Véhicule selon la revendication 1,
caractérisé en ce que
le déflecteur de vent (2) levé par pivotement appuie par sa zone inférieure (8) sur le panneau supérieur de toit (11) et/ou une cassette de toit ouvrant.

3. Véhicule selon la revendication 2,
caractérisé en ce que
le déflecteur de vent levé par pivotement appuie sur le joint d'étanchéité (12) destiné au couvercle à coulisse du toit.

4. Véhicule selon la revendication 1,
caractérisé en ce que
le déflecteur de vent (2) levé par pivotement ressort jusqu'à 35 mm au dessus du contour de toit (1).

5. Véhicule selon la revendication 1,
caractérisé en ce que
le déflecteur de vent (2) a une section transversale légèrement en forme de S et son bord supérieur (12) est orienté vers l'arrière.

6. Véhicule selon la revendication 5,
caractérisé en ce que
le filet (9) commence au-dessous du point d'inversion de la forme de S.

7. Véhicule selon la revendication 1,
caractérisé en ce que
sur le bord inférieur (14) de la zone de section transversale (10) à section entièrement continue est monté un filet flexible (9) fixé, à son bord (15) opposé, sur la cassette de toit ouvrant (7) et/ou sur le toit.

8. Véhicule selon la revendication 1,
caractérisé en ce que
le déflecteur de vent (2) est déplaçable vers le dessous, à l'encontre de la force d'un ressort (13) , sous la force due au vent, à partir d'une vitesse de marche d'environ 100 km/h.
